Europäisches Patentamt

European Patent Office

Office européen des brevets

(19)

(11) Publication number: **0 190 489 B1**

# EUROPEAN PATENT SPECIFICATION

(45) Date of publication of patent specification: **30.10.91**   (51) Int. Cl.⁵: **G10L 5/06**

(21) Application number: **85308328.5**

(22) Date of filing: **15.11.85**

(54) **Speaker-independent speech recognition method and system.**

(30) Priority: **27.12.84 US 687103**

(43) Date of publication of application:
**13.08.86 Bulletin 86/33**

(45) Publication of the grant of the patent:
**30.10.91 Bulletin 91/44**

(84) Designated Contracting States:
**DE FR GB**

(56) References cited:

ICASSP '85, PROCEEDINGS, 26th-29th March
1985, vol. 2, Tampa, Florida, pages 882-885,
IEEE, New York, US; P.K. RAJASEKARAN et
al.: "Speech recognition in the F-16 cockpit
using principal spectral components"

IEEE TRANSACTIONS ON COMPUTERS, vol.
C-20, no. 9, September 1971, pages 972-978,
IEEE, New York, US; L.C.W. POLS: "Real-time
recognition of spoken words"

IEEE TRANSACTIONS ON ACOUSTICS,
SPEECH, AND SIGNAL PROCESSING, vol.
ASSP-24, no. 6, December 1976, pages
550-558, IEEE, New York, US; M.R. SAMBUR et
al.: "A statistical decision approach to the

recognition of connected digits"

(73) Proprietor: TEXAS INSTRUMENTS INCORPO-
RATED
13500 North Central Expressway
Dallas Texas 75265(US)

(72) Inventor: **Doddington, George R.**
910 St. Lukes Drive
Richardson Texas(US)
Inventor: **Enrico, Bocchier**
12250 Abrams Rd., No. 1135
Dallas Texas(US)

(74) Representative: **Abbott, David John et al**
Abel & Imray Northumberland House 303-306
High Holborn
London, WC1V 7LH(GB)

## Description

This invention relates to speech recognition and, more particularly, relates to a method and apparatus particularly adapted for speaker-independent speech recognition.

Substantial effort has heretofore been exerted in developing speech recognition systems which are speaker-dependent or that require each user of the system to enroll his own voice in order to achieve acceptably high recognition performance. A more difficult task has been to develop a speaker-independent speech recognition system which will recognize a person's speech without that particular person being required to supply the system with samples of his speech prior to usage.

Previously developed speech recognition systems have attempted to achieve speaker independence by sampling speech data from a large number of speakers. These data are then either averaged together to form a single representative reference pattern for each word or the data are clustered into a variety of multiple reference patterns in which each pattern is supposed to represent a particular dialeatical or acoustical manifestation of the word. Unfortunately, such prior approaches have been relatively ineffectual and have provided generally unacceptable speaker-independent speech recognition performance.

M.R. Sambur and L.R. Rabiner, in the article "A Speaker-Independent Digit-Recognition System," published in the Bell System Technical Journal, Volume 54, No. 1, January, 1975, disclosed an algorithm for speaker-independent recognition of isolated digit words by segmenting the unknown. word into three regions and then making categorical judgments as to which of the six broad acoustic classes each segment fails. Digit verification is then provided, since each digit has unique categorical patterns. Preliminary experiments were conducted based on the same technique and a complex connected speech segmentation algorithm, as reported in the article "Some Preliminary Experiments in the Recognition of Connected Digits," IEEE Transactions, ASSP, April, 1976. However, such prior algorithm approaches have provided only moderate recognition rates.

The published article Statistical Decision Approach to the Recognition of Connected Digits" - Sambur et al, IEEE Transactions on Acoustics, Speech, and Signal Processing, Vol. ASSP-24, No.6, pp. 550-558 (December 1976), discloses the speech recognition of connected digits by relying upon a statistical pattern recognition approach based upon distance measures between a test digit and the stored reference patterns for each of ten digits. Initially the spoken utterance is analyzed to find its end points and to provide a voiced-unvoiced-silence contour.

Thereafter, the digit string is segmented into individual digits using the voiced-unvoiced contour and additional energy information. For each segmented digit, the voicing region is analyzed by linear predictive coding (LPC). The parameters used for speech recognition are therefore LPC coefficients in each frame plus the duration of the voiced region of the segmented digit.

More recently improved techniques have been disclosed utilizing algorithms which provide higher accuracy word recognition rates, such as disclosed in the articles "Application of Dynamic Time Warping to Connected Digit Recognition," by Rabiner and Schmidt, IEEE Trans, ASSP, August, 1980 and "Connected Digit Recognition Using a Lever-Building DTW Algorithm," by Myers and Rabier, IEEE Trans, ASSP, June, 1981. However, such techniques require relatively large numbers of reference templates for each word and require multiple passes of input data due to the relatively inefficient level building time registration technique.

Previously developed speaker-independent recognition systems have, in general, neglected a fundamental problem which has created ineffective performance. This problem is the inadequacy of the measures of the speech data used to discriminate the basic sounds of speech. Measures which are normally used are typically derived from a frame-by-frame analysis of speech. For example, the speech may be modelled as a sequence of steady-state frames, with each frame covering about 20 milliseconds or about 50 frames per second, and the speech signal is represented by a sequence of speech features with one set of speech features being computed for each frame of speech data.

With such prior speech recognition techniques, speech discrimination is thus typically achieved by computing the Euclidean distance between corresponding frames of input and reference feature vectors. This has appeared to be an optimum statistical solution to the problem, assuming that (1) adjacent frames of the speech signal are uncorrelated and (2) the variability of the speech signals are independent of the word or sound which produces them. Unfortunately, both of these two assumptions are incorrect and have thus created inaccuracies and unreliability in previous speech recognition techniques. A need has thus arisen for a speech recognition technique which is not based upon the above-noted assumptions and which provides improved speaker-independent speech recognition.

The present invention provides a method and apparatus for speech recognition which substantially minimizes or eliminates the disadvantages of previously developed speech recognition systems.

According to a first aspect of the present invention there is provided a method of recognizing input speech signals organized into a sequence of frames comprising: storing a plurality of reference frames of reference feature vectors representing reference words, generating feature vectors for each frame of said speech signals, determining the distance measure between respective frames of feature vectors representative of said speech signals and each of said plurality of reference frames of reference feature vectors representing reference words to establish the best match between each frame of feature vectors and one of the plurality of reference frames of reference feature vectors, and recognizing said input speech signals as one of said reference words based upon the best match between respective frames of feature vectors and a corresponding one of the plurality of reference frames of reference feature vectors; characterized in that the generation of feature vectors for each frame of speech signals is provided by generating a spectral feature vector for each frame of said speech signals, and by concatenating said spectral feature vectors of adjacent frames to form frame-pair feature vectors, transforming said frame-pair feature vectors to compute the likelihood that each frame-pair feature vector was produced by each said reference frame, said computation being performed individually and independently for each said reference frame, and in that the determination of the distance measure is accomplished by constructing an optimum time path through said input speech signals as represented by the frame-pair feature vectors for each of said computed likelihoods, and the recognition of said input speech signals as one of said reference words is achieved in response to said computed likelihoods and said optimum time paths.

According to a second aspect of the present invention there is provided apparatus for recognizing input speech signals organized into a sequence of frames in accordance with the method as set forth in any preceding claim, wherein said apparatus comprises means for storing a plurality of reference frames of reference feature vectors representing reference words, means for generating feature vectors for each frame of said speech signals, means for determining the distance measure between respective frames of feature vectors representative of said speech signals and each of said plurality of reference frames of reference feature vectors representing reference words to establish the best match between each frame of feature vectors and one of the plurality of reference frames of reference feature vectors, and decision logic means for recognizing said input speech signals as one of said reference words based upon the best match between respective frames of feature vectors and a corresponding one of the plurality of reference frames of reference feature vectors; characterized in that said feature vector generating means comprises means for generating a spectral feature vector for each frame of said speech signals, means for concatenating said spectral feature vectors of adjacent frames to form frame-pair feature vectors, means for transforming said frame-pair feature vectors including means for computing the likelihood that each frame-pair feature vector was produced by each said reference frame, said computation being performed individually and independently for each said reference frame, said distance measure determining means comprising means for constructing an optimum time path through said input speech signals as represented by the frame-pair feature vectors for each of said computed likelihoods, and said decision logic means being effective for recognizing said input speech signals as one of said reference words in response to said computed likelihoods and said optimum time paths.

The feature vector for each frame of speech is defined to be the concatenation of the speech parameters for that frame and those from the previous frame. Thus, the dynamics of the speech signal are explicitly accommodated. Secondly, the variability of the speech features is explicitly calibrated individually for each reference frame of speech. This is accomplished by computing the covariance matrix of the feature vector individually for each reference frame. These convariance matrices are then used to transform the input speech vector independently for each reference frame so as to achieve an optimum discrimination between each reference word and sound.

More specifically, input speech signals are organized into a sequence of frames by initially storing a plurality of reference frames of reference feature vectors representing reference words. A plurality of spectral feature vectors are generated by linear predictive coding for each frame of the speech signals. The spectral feature vectors are then transformed to a plurality of filter bank representations. The filter bank representations are then transformed to an identity matrix of transformed input feature vectors. The feature vector boundaries are then concatenated for each frame and its succeeding frame. The likelihood is then computed that each input feature vector was produced by each of the reference frames. The computation is performed individually and independently for each of the reference frames. Dynamic time warping is then utilized to construct an optimum time path through the input speech signals for each of the computed likelihoods. The input speech signals are then recognized as one of the reference words in response to the computed likelihoods and the optimum time paths.

## DESCRIPTION OF THE DRAWINGS

3

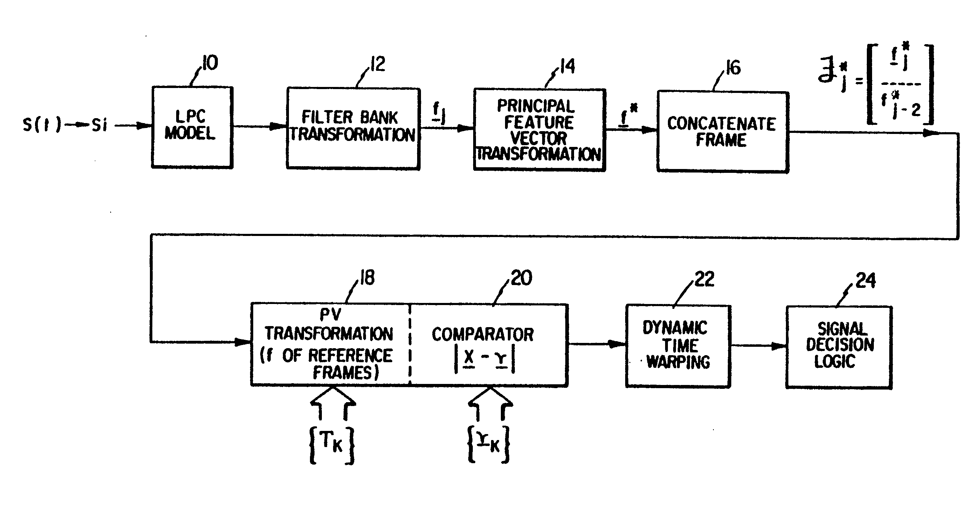

For a more complete understanding of the present invention and for other aspects and advantages thereof, reference is now made to the following description taken in conjunction with the accompanying drawing, in which:

The FIGURE illustrates a block diagram of a speech recognition system according to the invention.

## DESCRIPTION OF THE PREFERRED EMBODIMENT

The FIGURE illustrates a system for accomplishing speech recognition in accordance with the present invention. Initially, a reference set of frames of feature vectors for reference words is stored for use with the system, as will be subsequently described. The input speech signal S(t) to be recognized by the system is digitized to signal S(i) and is applied to a linear predictive coding (LPC) model system 10. The LPC model 10 is the preferred embodiment for providing frame-wise analysis of the input signal analysis or characterizing a speech signal by feature vectors which are organized in time in groups. The LPC polynomial used by the linear prediction models human speech as the output of a time-varying recursive N pole filter with periodic or random inputs and essentially operates as a filter with N poles. A typical digitization of S(t) provides fifty frames per second, or a twenty millisecond frame. Thus, the LPC model 10 provides a set of feature vectors during each twenty millisecond frame, the set of feature vectors including the reflection coefficients of the LPC model, rms energy and pitch/voicing. In the preferred embodiment, a tenth order LPC model may be used and each signal is represented by a twelve element feature vector for each twenty millisecond frame when the ten reflection coefficients of the LPC model are considered. The LPC model is further described and explained in EP-A-116 324.

The modelled signal is then applied to a filter bank transformer 12 which transforms the signal into spectral coefficients. The transformed speech signal is thereafter represented by a sixteen element spectral feature vector including rms energy, pitch/voicing and fourteen filter bank amplitudes. The filter bank transformation makes the frame-by-frame dynamics and the coefficient interdependencies more explicit and easier to model by the system. An autocorrelation function is utilized to produce the filter bank transformation 12 and a program listing in FORTRAN language for implementing the transformation in a general purpose digital computer is attached herewith as Appendix A. The program listing of Appendix A is entitled "RHO to FB" and includes a data file that drives RHO to the filter bank transformation which is identified as Appendix B.

The transformation of the LPC model to a filter bank is termed principal component analysis (PCA) which provides spectral amplitude coefficients, termed principal spectral components (PSC). The filter bank transformer 12 in the preferred embodiment comprises a fourteen element filter bank which thus provides the spectral feature vector $f_j$ in dB amplitude as a function of frequency. In accordance with the invention, the spectral feature vector $\bar{f}_j$ is statistically characterized and a linear transformation of the spectral feature vector is based upon that characterization.

In one aspect of the invention, a spectral vector may be appended to and associated with the measured energy in voicing conditions. This results in a spectral vector and a measure of the overall dB energy, which is twenty times the log base ten of the rms signal level, in combination with a pitch tracker to determine whether the pitch is voiced or unvoiced (periodic or aperiodic).

The transformed spectral feature vectors $f_j$, whether they are fourteen spectral amplitudes alone or fourteen spectral amplitudes in combination with log energy and pitch, are applied to the principal feature vector transformer 14. An initial diagonalizing transformation is then performed on the spectral feature vectors $f_j$. The diagonalizing transformation makes the global covariance matrix (covariance being measured over all reference frames) an identity or eigen matrix. The diagonalizing transformation is obtained by estimating the covariance matrix and determining the eigen vectors which may be represented as:

$$\Sigma = \mu ' \Lambda \mu \quad (1)$$

The spectral feature vector is multiplied by aspects of the eigen vectors to provide the linear transformation set forth below:

$$f^* = \Lambda^{\frac{1}{2}} \mu \, f \quad (2)$$

The linear transformation is thus provided by statistically characterizing the Gaussian distribution and covariance matrix sigma, the sigma being estimated and assumed to be independent of j. The spectral

4

feature vector is statistically modelled thereby.

The principal feature vector transformation is described in greater detail in a FORTRAN program listing suitable for being run on a general purpose computer and attached herewith as Appendix C.

The transformation 14 is executed to ease the subsequent computation of the likelihood function. In addition, the technique provides a substantial increase in resolving power beyond what would be provided by a filter bank transformation alone. In the preferred embodiment of the invention, the computed eigen values are ranked in order of magnitude and only the ten highest are utilized in order to provide high resolution and to reduce noise. The reduction of the features by eliminating eigen values, in addition to eliminating noise, reduces the task of frame specific modelling. Further, the required numerical precision is reduced because subsequent frame-specific covariance matrices will be closer to identity matrices.

The feature boundaries of the spectral feature vector frames are then concatenated with those of the previous frame at step 16 in the drawing to form frame-pair feature vectors which respectively represent the feature vectors for each speech frame. The dynamics of the speech signals are important and thus are explicitly characterized. The resulting concatenated data may be represented as $F^{*}_{j}$. The concatenation of the present invention is described in greater detail in the FORTRAN program attached herewith as Appendix D.

The concatenated frames from 16 are then applied to the principal vector transformer 18 and comparator 20 so that for each transformed frame-pair feature vector the likelihood is computed that the transformed frame-pair feature vector was produced by each reference frame. The previously stored reference data are utilized in this computation process. The computation is performed individually and independently for each feature vector represented by a transformed frame-pair feature vector v and each stored reference frame. The computation is accomplished by multiplying the frame-pair feature vector by a matrix representing the statistical distribution of the frame-pair feature vector under the hypothesis that it was produced by a particular reference frame. This requires a substantial parallel transformation for each frame due to the large number of statistical distributions. In the iterative process, the comparator 20 computes the Euclidean distance according to:

$$| \underline{x} - \underline{\tau} | \qquad (3)$$

The Euclidean distance calculation, in combination with the transformation, results in a high level of computations, and thus, if desired, a single transformation may serve to represent many different reference frames. This may be achieved by clustering together those covariance matrices with small specified divergencies. For more detail of the transformation made and comparison provided by transformer 18 and comparator 20 in the Figure, reference is made to the attached FORTRAN program listing of Appendix D.

As may be seen in the program listing, the computation is provided by multiplying a matrix, subtracting a vector and summing the squares to produce a scalar result.

A dynamic time warping system 22, using the likelihoods produced in steps 18 and 20, constructs optimum time paths through the input data for each computed reference word hypothesis. At this stage, statistical independence of the frames is assumed. However, time dependencies have already been incorporated into the feature vector definition and thus, the input likelihood measurements assist to avoid any deleterious aspects of this assumption. For more detailed description of the dynamic time warping system 22, reference is made to the FORTRAN program listing attached hereto as Appendix E.

The dynamic time warping system determines the lowest error cumulative path which provides an optimally aligned vector hypothesis for use by high level signal decision logic 24 which operates by utilizing conventional time alignment and decision-making techniques to determine whether or not to declare a word as being recognized. A description of dynamic time warping and signal decision logic may be found in EP-A-116 324. As an example of the signal decision logic, if the highest likelihood word has a high enough specified likelihood, and if this likelihood is significantly greater than the next best word, this word would be declared as recognized.

The present technique allows the use of a smaller number of reference templates per word (one or two) as contrasted with the large number of templates required by previously defined prior techniques, thereby allowing more efficient use of computer resources.

The present invention may also be used in speaker-dependent recognition. The present invention includes the discrimination of speech sounds based upon their phonetic quality. Therefore, such discrimination may be used to improve the performance of speaker-dependent speech recognition. This may be accomplished by retaining two key aspects of the invention, namely the frame-pair feature definition and the frame-specific transformation, which is speaker independent, and then by modifying the reference data to

5

be speaker-dependent rather than speaker-independent.

In order to define the necessary word-specific probabilistic reference data models for use in the invention, a dialect balanced, sexed balanced, large data base consisting of 27,720 digit sequences (the length of the sequences ranging from one digit to seven digits, spoken by 360 speakers from 20 dialect areas) was collected. In order to derive a truly speaker-independent recognition algorithm, this data base was subdivided into a trading set and a test set in which there was no overlap of speakers. The training tokens contained data selected from equal numbers of male speakers and female speakers, and from equal numbers of speakers from each dialect region. With the use of the present invention, dynamic time warping with no end point constraint was utilized to allow the test sequence to be optimally time aligned with the templates more efficiently. A test of the invention utilizing the above-noted reference data base indicated approximately 2.75% digit substitution rate, 2.25% digit deletion rate and 0.8% digit insertion rate (weighted by the total number of digits).

The present invention may be particularly utilized in speaker-independent recognition of connected speech, with a finite vocabulary such as digits. The invention provides reliable natural voice input for executive voice terminals, voice entry control, direct voice input to computers and the like.

Although the preferred embodiment of the invention has been described in detail, it should be understood that various changes, substitutions and alterations can be made therein without departing from the scope of the invention as defined by the appended claims.

## APPENDIX A

```
      subroutine RHO_to_FB (RHO, NORDER, FB)
!
!Produce energy normalized filter bank output (in dB) from A/C function
!
!RHO:    real*4 array (0:NORDER), the input autocorrelation function
!
!NORDER:  integer*2 scalar, the LPC model order
!
!FB:      real*4 array (NFB), the filter bank output (in dB)
!
!FB_FILE: character scalar, the file name of the filter bank definition
!
!ADSMPD:  real*4 scalar, the sample period in microseconds
!
!NFB:     integer*2 scalar, the number of filters in the filter bank
!
      integer*2 NORDER, NFB
      real*4 RHO(0:NORDER), FB(*)
      parameter (mxord=32, mxsmp=8, mxflt=16, pi=3.1415927, twopi=2.0*pi)
      real*4 rhosmp(0:mxord,mxsmp,mxflt), ra(0:mxord)
      real*4 pc(0:mxord), rc(mxord)
      parameter (maxfilt=16) !maximum number of synthetic filters
      parameter (maxfsf=8) !maximum number of frequency samples per filter
      real*4 fst(maxfsf,maxfilt) !sample theta's for each filter
      character FB_FILE*(*)
!
      call RHO_to_K (RHO, NORDER, rc)
      call K_to_A (rc, NORDER, pc)
      call A_to_RA (pc, NORDER, ra)
      ra(0) = 0.5*ra(0)
      regy = 1.0
      do k=1,NORDER
            regy = regy*(1.0-rc(k)**2)
      end do
      do n=1,nfilt !transform LPC to filter bank
            egy = 0.0
            do k=1,nfsf
                  egyk = 0.0
                  do j=0,NORDER
                        egyk = egyk+rhosmp(j,k,n)*ra(j)
                  end do
                  egy = egy+regy/egyk
            end do
            FB(n) = 10.0*log10(0.5*egy/nfsf)
      end do
      return
!
!**********************************************************************************
      entry RHO_to_FB_SETUP (FB_FILE, ADSMPD, NFB)
      entry FB_SETUP (FB_FILE, ADSMPD, NFB)
      OPEN (5, name=FB_FILE, status='old', readonly, shared)
      READ (5, *) nfilt, nfsf
      NFB = nfilt
      do j=1,nfilt
            READ (5, *) (fst(i,j), i=1,nfsf)
            do i=1,nfsf !transform frequency to theta
                  fst(i,j) = fst(i,j)*ADSMPD*twopi*1E-6
                  do m=0,mxord
                        rhosmp(m,i,j) = COS (m*fst(i,j))
                  end do
```

```
            end do
        end do
        CLOSE (unit=5)
        return
        end
```

## APPENDIX B

```
14, 5 (# of filters, points per filter) -- definition of LPC-derivative FB
    60    80   100   120   140 !sampling frequencies for filter  1
   160   180   200   220   240 !sampling frequencies for filter  2
   260   280   300   320   340 !                        .  .
   360   380   400   420   440 !                   .
   460   480   500   522   546 !                   .
   570   596   623   651   680 !                   .
   711   742   776   811   847 !                   .
   885   925   966  1010  1055 !                   .
  1102  1152  1204  1258  1314 !                   .
  1373  1435  1499  1567  1637 !                   .
  1710  1787  1868  1951  2039 !                   .
  2131  2226  2326  2431  2540 !                   .
  2654  2773  2898  3028  3164 !                   .
  3306  3454  3609  3771  3941 !sampling frequencies for filter 14
14 (# of principal components)
 25.4088 -42651 -46316 -48429 -41126 -29422 -18281 -11270   -6234     -63    3217
  9.6308  13617  21934  16812   -9228 -30949 -41489 -39903 -36390 -35051 -34521
  7.3321  24757  22490  16002     580 -16044 -19220 -12503   -5169    7706  30975
  5.5073  22795  23876    2279 -39163 -47542 -18191  14517   33151   38962  21777
  5.0519 -13121   -6576    2316   7186     547 -15797 -24569 -25975 -11864  30741
  4.0720  13527    9382   -7711 -28862 -16294  17204  29930   13764 -29554 -46585
  3.3931  18139    9468 -12851 -22444    2088  24804  19356 -10036 -43136    1350
  2.7187   -2027    -882   1417   2421   -1100   -2163   1039    1624   -4428    2008
  2.4089 -21107 -12334  18576  31002   -9167 -31817   -1189  39773  15455 -52004
  1.3517 -25165 -15764  33166  26354 -39338   -9758  43363  11885 -46711  33784
  0.8940  36402   -1831 -52238  21154  24447 -47638   1389  37079 -30565  13885
  0.4564  31746 -16100 -33876  47209 -40203    6804  27885 -44903  26324 -13047
  0.2137 -21848  22608    2356 -18197  35410 -49424  57638 -37144  15419   -5471
  0.1327 -47808  70013 -39392  25143 -16975  14588   -7421    7047   -3719    2114
PSCGEN1 -- speaker-dependent covariance from the 320 test tokens of the 16
test speakers in the discrete word data base -- 56400 frames total
```

<u>APPENDIX C</u>

```
        subroutine FB_to_PSC (FB, NFB, PSC, NPSC)
!
!Produce Principal Spectral Component vector from LPC autocorrelation function
!
!FB:    real*4 array (NFB), the input filter bank amplitudes (in dB)
!
!NFB:   integer*2 scalar, the number of filters in FB
!
!PSC:   real*4 array (NPSC), the PSC output
!
!NPSC:  integer*2 scalar, the number of PSC's in the PSC specification
!
!PSC_FILE: character scalar, the file name of the filter bank definition
!
!NFILT: integer*2 scalar, the number of filters in the FB specification
!
!note:  NPSC is output from FB_to_PSC_SETUP and is input to FB_to_PSC
!note:  NFB input to FB_to_PSC must equal NFILT output from FB_to_PSC_SETUP
!
        integer*2 NFB, NPSC
        real*4 FB(NFB), PSC(*)
        parameter (mxord=32, mxsmp=8, mxflt=16, pi=3.1415927, twopi=2.0*pi)
        parameter (maxfilt=16) !maximum number of synthetic filters
        parameter (maxpsc=16) !maximum number of principal spectral components
        parameter (maxfsf=8) !maximum number of frequency samples per filter
        real*4 pscxfm(maxfilt,maxpsc) !principal component transformation
        character PSC_FILE*(*)
!
        if (NFB.ne.nflt) then
                type *, NFB, nflt, ' # filters input must agree with # set up'
                STOP ' FB_to_PSC error'
        else if (NPSC.gt.mpsc .or. NPSC.le.0) then
                type *, NPSC, mpsc, ' # PSC''s input must be <= # set up'
                STOP ' FB_to_PSC error'
        end if
        do i=1,NPSC !transform filter bank to principal components
                PSC(i) = 0.0
                do n=1,nflt
                        PSC(i) = PSC(i)+fb(n)*pscxfm(n,i)
                end do
        end do
        return
!
!******************************************************************************
        entry FB_to_PSC_SETUP (PSC_FILE, NFILT, NPSC)
        OPEN (5, name=PSC_FILE, status='old', readonly, shared)
        READ (5, *) nflt, nfsf
        if (nflt.gt.maxfilt .or. nflt.le.0) then
                type *, nflt, ' illegal # of filters'
                STOP ' FB_to_PSC_SETUP error'
        end if
        NFILT = nflt
        do j=1,nflt
                READ (5, *) fstij
        end do
        READ (5, *) mpsc
        if (mpsc.gt.maxpsc .or. mpsc.le.0) then
                type *, mpsc, ' illegal # of PSC''s'
                STOP ' FB_to_PSC_SETUP error'
        end if
```

17

```
NPSC = mpsc
do j=1,mpsc
        READ (5, *) eigval, (pscxfm(i,j), i=1,nflt)
        pscnorm = 1E-5/SQRT(eigval)
        do i=1,nflt !scale pscxfm
                pscxfm(i,j) = pscnorm*pscxfm(i,j)
        end do
end do
CLOSE (unit=5)
return
end
```

## APPENDIX D

program RECCOVE

```
!
!RECCOVE: This uses the COV statistics file format and therefore does
!does not need to read RTS format reference files at the scanning level.
!Only the covariance file is used.

!At the recognition level, provision is made for optionally reading either
!RTS or COV files.
!
!RECCOVE: This is a modification to RECCOVD which uses the AP to speed up
!computation at the scanning level.
!
!RECCOVD: This is a modification to RECCOVC which uses a second-level
!recognition stage which implements a nearest-neighbor strategy and which uses
!exactly the same metric as the scanning level does.
!
!RECCOVC: This is a modification to RECCOVA which converts the Euclidean
!distance measurement to give a correct log likelihood estimate by adding a
!term to account for the dispersion of the covariance matrix.
!
!RECCOVA: This is a one-line modification to RECCOV which uses the average
!feature vector values stored in the covariance file for the reference rather
!than reconstructing the feature vectors from the reference LPC/RTS file
!(which averages by averaging autocorrelation functions).
!
!RECCOV: This is a modification of DIGREC:RECPC which provides for
!transformations of the input data specific to each reference frame (thus
!implementing a model of statistical distribution which is a function of the
!reference frame).
!
!The reference files are labeled in the descriptor string with recognition
!class and pattern affiliation. After "name = " comes the pattern affiliation
!(Equivalent frames are used in nearest-neighbor technique to compute minimum
!distance to reference frame). After "display = " comes the recognition class.
!
        parameter (luvoc=21, lvvoc=22, luinp=23, ludat=24, ludbg=25)
        parameter (maxmarks=21, maxclass=22, maxrefpwd=25)
        parameter (maxord=16, maxref=99, maxreffrm=500, maxinfrm=999)
        parameter (maxrec=999, maxrecfrm=9999, maxeq=9999)
        parameter (maxfv=28, maxdim=maxfv*maxrefpwd, maxflt=16, maxtok=5000)
        parameter (maxapmem=32767, maxbatch=99)
        character*80 refiles, hvfiles, reffile, covfile, fbfile, pcfile, fvfile
        character*80 infiles, inpfile, xfile, scnname(maxref), recname(maxrec)
        character*80 inpsav(maxtok)
        character recclass(maxclass)*20, filetype*3, printopt*1, diagnostic*1
        character reclabel(maxref)*20, reflabel(maxref)*9
        character UPPER_CASE*80, descr*78, cstr*80, FULL_FILE_NAME*80
        integer*2 nfreg(maxrefpwd,maxref)
        integer*2 nsbest(maxclass,maxtok), nrsbest(maxclass,maxtok)
        integer*2 nrvbest(maxclass)
        integer*2 class(maxref), conf(maxclass+1,maxclass+1)
        integer*2 indata(99), header(256), refheader(256)
        integer*2 error, ismprd, ismprd_ref, norder, norder_ref
        integer*2 nfilt_in, nfilt_ref, nft_in, nft_ref
        integer*2 nfrmlref(maxreffrm), nfrm2ref(maxreffrm), nfrmsref(maxreffrm)
        integer*2 nfrmlrec(maxrec), nfrmsrec(maxrec)
        integer*2 nhyp(maxrec), hypref(maxeq), neqrefl(maxrec)
        integer*2 egyin(maxinfrm), pchin(maxinfrm)
```

```
      integer*2 nmarks(maxref), nmarks_in, nmarks_ref
      integer*2 navg(maxclass), icls(maxtok)
      integer*2 corl(1+maxdim*(maxdim+1)/2), ixf(2*maxfv)
      real*4 apmem(0:maxapmem)
      real*4 mean(maxdim), stdv(maxdim)
      real*4 covar(1+maxfv*(maxfv+1)/2), wrk(maxfv*(maxfv+3)/2)
      real*4 eigvals(maxfv), eigvect(maxfv,maxfv), xsc(maxfv)
      real*4 expval(maxclass), expstd(maxclass)
      real*4 dsum(maxclass), dssq(maxclass)
      real*4 qf(maxord), rho(0:maxord), rcoef(maxord), fb(maxflt)
      real*4 fpc(maxfv), fpcsave(maxfv), fpcr(maxfv), fpcrsave(maxfv)
      real*4 dst(maxclass), dist(maxclass,maxtok), distref(maxref)
      real*4 opterr(maxref)
      real*4 fvsin(maxfv,maxinfrm), fvrin(maxfv,maxinfrm)
      real*4 frmerr(maxreffrm*maxbatch), disp(maxreffrm), disprec(maxreffrm)
      real*4 dispref(maxref), disprecref(maxrec)
      real*4 xfm(maxfv,maxfv,maxreffrm), xfmrec(maxfv,maxfv,maxreffrm)
      real*4 reffv(maxfv,maxreffrm), recfv(maxfv,maxrecfrm)
      real*4 refegy(maxreffrm), refpch(maxreffrm)
      real*4 tmarks(maxmarks,maxref)
      real*4 tmarks_in(maxmarks), tmarks_ref(maxmarks)
      real*4 noise_floor
      real*8 dprc
      integer*4 OTS$CVT_T_D
      external SS$_NORMAL
      equivalence (header(66), ismprd), (refheader(66), ismprd_ref)
      equivalence (header(127), nfilt_in), (refheader(127), nfilt_ref)
      equivalence (header(128), floor_in), (refheader(128), floor_ref)
      equivalence (header(130), nft_in), (refheader(130), nft_ref)
      equivalence (header(131), norder), (refheader(131), norder_ref)
      equivalence (header(164), alpha), (refheader(164), alpha_ref)
      equivalence (header(166), frmprd), (refheader(166), frmprd_ref)
      equivalence (header(170), nframes), (refheader(170), nframes_ref)
      equivalence (header(214), nmarks_in), (refheader(214), nmarks_ref)
      equivalence (header(215), tmarks_in), (refheader(215), tmarks_ref)
      data recclass, reclabel, reflabel
     1       /maxclass*' ', maxref*' ', maxref*' '/

      parameter (npcnt=18, maxhist=9999)
      integer*2 hist_delta(-maxhist:maxhist)
      real*4 pcntile(npcnt), delta_dist(npcnt)
      data pcntile/ 0.001, 0.002, 0.005, 0.01, 0.02, 0.05, 0.1, 0.2, 0.4,
     1       0.6, 0.8, 0.9, 0.95, 0.98, 0.99, 0.995, 0.998, 0.999/
      data delta_max/99.99/

      data noise_floor /0.1/
      data egy_ratio   /0.1/ !ratio of max RMS word egy to beg/end word egy
      data word_gap    /0.2/ !between-word gap, in seconds

      type *, 'start RECCOVE'

      call GETR4 (noise_floor, ' Noise floor:  ', noise_floor)
      type *, noise_floor, ' noise floor'

      call LIB$GET_INPUT (refiles,
     1       ' name of file of scanning ref file names:  ', jchr)
      call TRNLOG (refiles, refiles, jchr, error)
      if (error.ne.1) stop 'ERROR--refiles translation error'
      refiles = FULL_FILE_NAME (refiles, error)
      call SP_RETCODE (error)
```

```
      type *, 'SCN:  ', refiles(:LENGTH(refiles))
      OPEN (unit=luvoc, name=refiles, status='old', shared, readonly)

      call LIB$GET_INPUT (hvfiles,
     1        ' name of file of recognition ref file names:  ', jhvf)
      if (jhvf.gt.0) then
            call TRNLOG (hvfiles, hvfiles, jchr, error)
            if (error.ne.1) stop 'ERROR--hvfiles translation error'
            hvfiles = FULL_FILE_NAME (hvfiles, error)
            call SP_RETCODE (error)
            type *, 'REC:  ', hvfiles(:LENGTH(hvfiles))
            OPEN (unit=lvvoc, name=hvfiles, status='old', shared, readonly)
      else
            type *, 'REC:  no recognition level'
      end if

      call LIB$GET_INPUT (infiles,
     1        ' name of file of input file names:  ', jchr)
      call TRNLOG (infiles, infiles, jchr, error)
      if (error.ne.1) stop 'ERROR--infiles translation error'
      infiles = FULL_FILE_NAME (infiles, error)
      call SP_RETCODE (error)
      type *, 'IN:  ', infiles(:LENGTH(infiles))
      OPEN (unit=luinp, name=infiles, status='old', shared, readonly)

      call LIB$GET_INPUT (fbfile, ' name of filter bank definition file:  ')
      call TRNLOG (fbfile, fbfile, jchr, error)
      if (error.ne.1) stop 'ERROR--fbfile translation error'
      fbfile = FULL_FILE_NAME (fbfile, error)
      call SP_RETCODE (error)
      type *, 'FB:  ', fbfile(:LENGTH(fbfile))
      call FB_SETUP (fbfile, 1E2, nfilt)
      if (nfilt.gt.maxflt) STOP 'too many filters specified'

      call LIB$GET_INPUT (pcfile,
     1        ' name of principal component definition file:  ')
      call TRNLOG (pcfile, pcfile, jchr, error)
      if (error.ne.1) stop 'ERROR--pcfile translation error'
      pcfile = FULL_FILE_NAME (pcfile, error)
      call SP_RETCODE (error)
      type *, 'PC:  ', pcfile(:LENGTH(pcfile))
      call PC_SETUP (pcfile, npcout, nfiltin)
      if (nfilt.ne.nfiltin) then
            type *, '# filters output doesn''t agree with # filters input',
     1                  nfilt, nfiltin
            STOP
      end if

      call GETI4 (npcuse,
     1        ' # of principal components to use for scanning:  ', npcout)
      npcs = MIN(npcout,npcuse)
      type *, npcs, ' principal components per frame for scanning'
      if (npcs.gt.maxfv) STOP 'too many principal components'

      call GETI4 (npcuse,
     1        ' # of principal components to use for recognition:  ', npcout)
      npcr = MIN(npcout,npcuse)
      type *, npcr, ' principal components per frame for recognition'
      if (npcr.gt.maxfv) STOP 'too many principal components'
```

13

```
!process input files
19      continue
        CLOSE (unit=lvvoc)
        nrec = 0
            iafvr = 0                              !AP address of ref vectors
            iaxfm = iafvr+nfref*nfeat              !AP address of xfm matrices
            iawkarea = iaxfm+nfref*nfeat**2 !AP address of work area
            iaxsc = iawkarea+nfeat+nfref           !AP address of scratch vector
            iafrmerr = iaxsc+nfeat                 !AP address of output errors
        nfbatch = (maxapmem-iafrmerr)/(nfref+nfeat)
        if (nfbatch.le.0) STOP 'insufficient AP memory'
        nfbatch = MIN(nfbatch,maxbatch)
        iafvsin = iafrmerr+nfbatch*nfref
        do j=1,nfref
            call COPY (4*nfeat, reffv(1,j), apmem(iafvr+(j-1)*nfeat))
            iaxi = iaxfm+(j-1)*nfeat**2
            do i=1,nfeat         .
                call COPY(4*nfeat, xfm(1,i,j), apmem(iaxi+(i-1)*nfeat))
            end do                               .
        end do
10      continue
        read (luinp, 100, end=999) inpfile
        inpfile = FULL_FILE_NAME (inpfile, error)
        call SP_RETCODE (error)
        inpsav(nrec+1) = inpfile
        call SP_OPEN_READ (ludat, inpfile, error)
        call SP_RETCODE (error)
        call SP_GET_HEADER (ludat, header, error)
        call SP_RETCODE (error)      .
        if (ismprd.ne.ismprd_ref) then
            type *, ismprd, ', incorrect sample period, file discarded'
            go to 10
        else if (norder.ne.norder_ref) then
            type *, norder, ', incorrect LPC model order, file discarded'
            go to 10
        else if (nframes.gt.maxinfrm) then
            type *, nframes, ', too many input data frames, file discarded'
            go to 10
        else if (alpha.ne.alpha_ref) then
```

```
        call GETI4 (nfrmpfv, ' # of frames to use:  (1 or 2)  ', 1)
        if (nfrmpfv.ne.1 .and. nfrmpfv.ne.2) STOP 'invalid nframes per feature'
        type *, nfrmpfv, ' frames per feature vector'
        nfeat = nfrmpfv*npcs
        nftrc = nfrmpfv*npcr
        if (nfeat.gt.maxfv) STOP 'feature vector too big'
!
        call GETR4 (dpwt, ' DP time penalty weighting factor:  ', 0.0)
        type *, dpwt, ' DP time penalty weighting factor'
!
        call LIB$GET_INPUT (printopt, ' type "P" to print errors:  ')
        printopt = UPPER_CASE (printopt)
        type *, ' print option: ', printopt
!
        call LIB$GET_INPUT (diagnostic,
      1        ' type "D" to produce diagnostic output:  ')
        diagnostic = UPPER_CASE (diagnostic)
        type *, ' diagnostic option:  ', diagnostic
!
!read in reference statistics for scanning
        nref = 0
        nfref = 0
        nclass = 0
      1 continue
        read (luvoc, 100, end=9) reffile
    100 format (a)
        reffile = FULL_FILE_NAME(reffile, error)
        call SP_RETCODE (error)
        scnname(nref+1) = reffile
        call SP_OPEN_READ (ludat, reffile, error)
        call SP_RETCODE (error)
        call SP_GET_HEADER (ludat, header, error)
        call SP_RETCODE (error)
        if (nref.eq.0) then
                call COPY (512, header, refheader)
                call FB_SETUP (fbfile, FLOAT(ismprd_ref), nfilt)
        end if
        if (header(65).ne.38) then
                type *, ' incorrect file type '//reffile(:LENGTH(reffile))
                go to 8
        else if (nft_in.lt.npcs) then
                type *, 'inadequate # of features '//reffile(:LENGTH(reffile))
                go to 8
        else if (ismprd.ne.ismprd_ref) then
                type *, ismprd, ', wrong smpprd '//reffile(:LENGTH(reffile))
                go to 8
        else if (norder.ne.norder_ref) then
                type *, norder, ', wrong LPC order '//reffile(:LENGTH(reffile))
                go to 8
        else if (alpha.ne.alpha_ref) then
                type *, alpha, ', wrong preemph '//reffile(:LENGTH(reffile))
                go to 8
        else if (nframes.gt.maxrefpwd) then
                type *, nframes, ' too many frames '//reffile(:LENGTH(reffile))
                go to 8
        end if
        if (floor_in.ne.noise_floor) type *,
      1        'Warning -- wrong noise floor '//reffile(:LENGTH(reffile))
        call COPY (28, header(32), %REF(xfile))
        if (xfile(:28).ne.fbfile) type *,
```

15

```
1          'Warning -- wrong filter bank def '//xfile(:LENGTH(xfile))
           call COPY (28, header, %REF(xfile))
           if (xfile(:28).ne.pcfile) type *,
1          'Warning -- wrong feature def '//xfile(:LENGTH(xfile))
           call COPY (78, header(67), %REF(descr))
           descr = UPPER_CASE (descr)
           ireclabel = 10+INDEX(descr, 'DISPLAY = ')
           if (ireclabel.eq.10) then
                   type *, 'bad DISPLAY label, ref discarded'
                   go to 8
           end if
           ireflabel = 7+INDEX(descr, 'NAME = ')
           if (ireflabel.eq.7) then
                   type *, 'bad NAME label, ref discarded'
                   go to 8
           end if
           if (norder.gt.maxord) STOP 'LPC order too large in ref pattern'
           nref = nref+1
           if (nref.gt.maxref) STOP 'too many ref patterns'
           lrecl = norder+3
           nfrm1ref(nref) = nfref+1
           nfrm2ref(nref) = nframes+nfref+1-nfrmpfv
           nfrmsref(nref) = nframes-(nfrmpfv-1)
           nmarks(nref) = nmarks_in
           call COPY (4*maxmarks, tmarks_in, tmarks(1,nref))
           reflabel(nref) = descr(ireflabel:)
           reclabel(nref) = descr(ireclabel:)
!
!if RECCLASS is the same, use word as alternative
           do nc=1,nclass
                   if (descr(ireclabel:ireclabel+2).eq.recclass(nc)) then
                           class(nref) = nc
                           go to 3
                   end if
           end do
           nclass = nclass+1
           if (nclass.gt.maxclass) STOP 'too many recognition classes'
           class(nref) = nclass
           recclass(nclass) = descr(ireclabel:)
!
!read in scanning reference data
3          continue
           ndim = nft_in*nframes
           call SP_READ (ludat, 1, 1, 2*ndim, nwx, mean, error)
           call SP_RETCODE (error)
           call SP_READ (ludat, 1, 1+2*ndim, 2*ndim, nwx, stdv, error)
           call SP_RETCODE (error)
           ix = 1+4*ndim
           do j=2,ndim
                   call SP_READ (ludat, 1, ix, j-1, nwx, corl(1+j*(j-1)/2), error)
                   ix = ix+j-1
           end do
           nfref = nfref+nframes+1-nfrmpfv
           if (nfref.gt.maxreffrm) STOP 'too many ref frames'
8          continue
           call SP_CLOSE (ludat, error)
           call SP_RETCODE (error)
!
!construct scanning transformations:
!   construct indices for picking elements out of covariance file
```

16

```
if (nfrmpfv.eq.2) then !use data from previous frame and current frame
        nfeat2 = nfeat/2
        if (nfeat.ne.2*nfeat2) then
                type *, '# of frame-pair features must be even!'
                STOP
        end if
        do n=1,nfeat2
                ixf(n) = n-nft_in
                ixf(nfeat2+n) = n
        end do
else !use data from each frame separately
        do n=1,nfeat
                ixf(n) = n
        end do
end if

compute frame-specific scanning transformations
dispref(nref) = 0.0
do nf=nfrmpfv,nframes
        nfr = nfrmlref(nref)+nf-nfrmpfv
        do kft=1,nfeat
                kftx = kft*(kft-1)/2
                k = nft_in*(nf-1)+ixf(kft)
                kx = k*(k-1)/2
                reffv(kft,nfr) = mean(k)
                do mft=1,kft-1
                        m = nft_in*(nf-1)+ixf(mft)
                        covar(mft+kftx) = stdv(k)*stdv(m)
                                *corl(m+kx)/32768.0
                end do
                covar(kft*(kft+1)/2) = stdv(k)**2
        end do
        call EIGRS (covar, nfeat, 2, eigvals, eigvect, maxfv, wrk, i4)
        if (i4.ne.0 .or. wrk(1).gt.1.0) then
                type *, 'EIGRS error:', i4, ', perf:', wrk(1)
                STOP
        end if
        disp(nfr) = 0.0
        do i=1,nfeat !construct frame-specific transformation
                xfmnorm = 1.0/SQRT(eigvals(i))
                disp(nfr) = disp(nfr)-LOG(xfmnorm)
                do j=1,nfeat
                        xfm(j,i,nfr) = xfmnorm*eigvect(j,i)
                end do
        end do
        dispref(nref) = dispref(nref)+disp(nfr)
        do i=1,nfeat !pre-transform the reference frames
                xsc(i) = 0.0
                do j=1,nfeat
                        xsc(i) = xsc(i)+reffv(j,nfr)*xfm(j,i,nfr)
                end do
        end do
        call COPY (4*nfeat, xsc, reffv(1,nfr))
end do
dispref(nref) = dispref(nref)/nfrmsref(nref)/nfeat
```

```
                type *, 'WARNING -- incorrect preemphasis', alpha, alpha_ref
        end if
        if (header(65).eq.28) then
                filetype = 'LPC'
                lrecl = norder+2
        else if (header(65).eq.40) then
                filetype = 'RTS'
                lrecl = norder+3
        else if (header(65).eq.50) then
                filetype = 'FBl'
                nfiltin = header(127)
                call COPY (4, header(128), floorin)
                if (nfiltin.ne.nfilt) then
                        type *, nfiltin, ', incorrect # filters ', inpfile
                        STOP
                else if (floorin.ne.noise_floor) then
                        type *, floorin, ', incorrect noise floor ', inpfile
                        STOP
                end if
                lrecl = 2+nfilt
        else
                type *, 'incorrect file type, input discarded'
                go to 10
        end if
        call COPY (78, header(67), %REF(descr))
        descr = UPPER_CASE (descr(:2))
        ireclabel = 2
        nrec = nrec+1
        ncls = nclass+1
        do nc=1,nclass
                if (descr(ireclabel:ireclabel+2).eq.recclass(nc)) then
                        ncls = nc
                end if
        end do
        icls(nrec) = ncls
        maxnpc = MAX(npcs,npcr) !---reset feature vector storage elements---**
        do n=1,maxnpc                                                        **
                fpcsave(n) = 9E9                                             **
        end do                                                              **
        call COPY (4*maxnpc, fpcsave, fpcrsave)                             **
        call COPY (4*maxnpc, fpcsave, fpc(1+npcs)                           **
        call COPY (4*maxnpc, fpcsave, fpcr(1+npcr)                          **
        do nf=1,nframes !read in data, generate feature vectors
                call SP_READ (ludat, lrecl, nf, lrecl, nwx, indata, error)
                call SP_RETCODE (error)
                if (filetype.eq.'LPC') then
                        call LPC_to_K (indata, norder, energy, pitch, rcoef)
                        call K_to_RHO (rcoef, norder, rho, norder)
                        rho(0) = (1.0+noise_floor)*rho(0)
                        call RHO_to_FB (rho, norder, fb)
                else if (filetype.eq.'RTS') then
                        call RTS_to_Q (indata, norder, iegy, ipch, qf, nx, nof)
                        call Q_to_RHO (qf, norder, rho, norder)
                        rho(0) = (1.0+noise_floor)*rho(0)
                        call RHO_to_FB (rho, norder, fb)
                else
                        do j=1,nfilt
                                fb(j) = indata(j+2)/128.0
                        end do
                end if
```

```
egyin(nf) = indata(1)
pchin(nf) = indata(2)
egydb = 20.0*LOG10(AMAX0(1,egyin(nf)))
if (pchin(nf).eq.0) then
        vcg = 0.0
else
        vcg = 1.0
end if
if (nfrmpfv.eq.1) then
        call FB_to_PC (egydb, vcg, fb, npcs, fvsin(1,nf))
        call FB_to_PC (egydb, vcg, fb, npcr, fvrin(1,nf))
else
        call COPY (4*npcs, fpcsave, fpc)
        call COPY (4*npcs, fpc(1+npcs), fpcsave)
        call FB_to_PC (egydb, vcg, fb, npcs, fpc(1+npcs))
        call COPY (4*nfeat, fpc, fvsin(1,nf))
        call COPY (4*npcr, fpcrsave, fpcr)
        call COPY (4*npcr, fpcr(1+npcr), fpcrsave)
        call FB_to_PC (egydb, vcg, fb, npcr, fpcr(1+npcr))
        call COPY (4*nftrc, fpcr, fvrin(1,nf))
    end if
end do

recognition
        call DP_INIT (nref, nfrmsref, nfeat*dpwt)
        distmin = 9E9
        do nc=1,nclass
                dist(nc,nrec) = 9E9
        end do
        do nr=1,nref
                distref(nr) = 9E9
        end do
        errnorm = 1.0/nfeat
        call APINIT (0, 0, istat)
        if (istat.lt.0) then
                type *, 'ERROR -- AP INIT status: ',istat
                stop
        end if
        call APPUT (apmem, 0, iafrmerr, 2)
        call APWD
        do nfb=1,nframes,nfbatch
                nfrm_do = MIN(nfbatch,1+nframes-nfb)
                do j=0,nfrm_do-1
                  call COPY (4*nfeat, fvsin(1,nfb+j), apmem(iafvsin+(j)*nfeat))
                end do
                call APPUT (apmem(iafvsin), iafvsin, nfrm_do*nfeat, 2)
                call APWD
                call DISTAP (nfeat, iafvsin, nref, iaxsc, iaxfm, iafvr,
1                       iawkarea, iafrmerr, nfrm_do)
                call APWR
                call APGET (frmerr, iafrmerr, nfrm_do*nref, 2)
                call APWD
        do nf=nfb,nfb+nfrm_do-1
                call COPY (4*nref, frmerr(1+(nf-nfb)*nref), frmerr)
          do nfr=1,nref
                err = 0.0
                do i=1,nfeat !transform the input for this reference frame
                        xi = 0.0
                        do j=1,nfeat
                                xi = xi+fvsin(j,nf)*xfm(j,i,nfr)
```

```
                    end do
                    err = err+(xi-reffv(i,nfr))**2
              end do
        end do
        do nr=1,nref
              call DP_SCAN (nr, nf, frmerr(nfrmlref(nr)), opterr(nr))
        end do
        do nr=1,nref
              nc = class(nr)
              oe = errnorm*opterr(nr)/nfrmsref(nr)
              if (oe.lt.distref(nr)) then
                    call DP_GET_TIMES (nr, nf, nfreg(1,nr))
                    distref(nr) = oe
                    if (oe.lt.dist(nc,nrec)) then
                          nsbest(nc,nrec) = nr
                          dist(nc,nrec) = oe
                          if (oe.lt.distmin) then
                                ncbest = nc
                                distmin = oe
                          end if
                    end if
              end if
        end do
        end do
        end do
        call APRLSE
```

APPENDIX E

```
      subroutine DP_LWR  !dynamic programming time registration specifically
                           for updating word recognition reference data.
!
! This subroutine performs a dynamic programming time normalization
! which finds the time path through the input data which minimizes a
! weighted sum of errors.  The only time constraint is that the step-wise
! time warp not exceed a factor of 2.  The function output value is the
! best-path WEIGHTED error, assuming that the current input frame corresponds
! to the last frame in the reference pattern.
!
! It is assumed that this subroutine will be called sequentially, once for
! each input frame.  It is also assumed that the reference pattern is formed
! by taking every OTHER frame, thus the necessity for buffering four frames of
! error data.  This also makes it convenient to achieve a factor of 2
! constraint on time warp without special memory of the previous step.
!
! call DP_INIT (NWRDS, NFRMIN, DPDTWT) !must be called to initialize/zero
!                       error track memory prior to beginning scanning
!
!       NWRDS:  integer*2 input scalar, the index of the reference word to
!                       be scanned.
!
!       NFRMIN: integer*2 input array (by NWRDS), the number of reference
!                       frames for each reference word
!
!       DPDTWT: real*4 scalar, the time penalty weighting factor
!
! call DP_SCAN (NW, TINDEX, ERRORS, OPTERR) !must be called every input frame
!
!       NW:     integer*2 scalar, the index number of the reference word
!                       for which the ERRORS were computed
!       TINDEX: integer*2 scalar, the time index of the input errors, from
!                       1 to maxinfrms
!       ERRORS: real*4 input array (by nref(NW)), the input error array
!                       errors(1) = error between input frame and ref frame 1
!                             of word NW
!                       errors(n) = error between input frame and ref frame n
!                             of word NW
!       OPTERR: real*4 output scalar, the optimum sequence error for the
!                       reference data time registration which terminates on
!                       the current input frame (the sequence error is defined
!                       as the WEIGHTED error between input and reference)
!
! call DP_GET_TIMES (NW, TLAST, TIMES) !to fetch optimum time warp
!
!       NW:     integer*2 scalar, the index number of the reference word
!                       under consideration
!       TLAST:  integer*2 input scalar, the input frame index corresponding
!                       to the last reference frame
!       TIMES:  integer*2 output array (by nref(NW)), the input frame indices
!                       corresponding to word NW's reference frames for the
!                       optimum sequence terminating on input frame TLAST.
!                       (e.g., TIMES(nref(NW)) = TLAST)
!
!*******
        integer*2 NW, NWRDS, TINDEX, TLAST, TIMES(*), NFRMIN
        real*4 ERRORS(*), OPTERR
!
        parameter (maxreffrms=222)
        parameter (maxinfrms=9999)
```

```
      parameter (maxwrds=999)
      parameter (nse=4, dpemax=9E34)
      integer*2 nframes(maxwrds), ixerr(maxwrds), isave(maxwrds)
      real*4 seqerr(nse,maxreffrms-1)
      byte time_incr(maxinfrms*maxreffrms)
      real*4 weight(1-nse:nse)

*******
      entry DP_INIT (NWRDS, NFRMIN, DPDTWT)

      ixtot = 0 !initialize seqerr offset address
      do k=1,nse
              weight(k) = dpdtwt*log(0.5*k)**2 !set up time weighting factor
              weight(k-nse) = weight(k)
      end do
      if (NWRDS.gt.maxwrds .or. NWRDS.lt.1) then
              type *, 'word index error in DP_INIT', NWRDS, maxwrds
              STOP
      end if
      call COPY (2*NWRDS, NFRMIN, nframes)
      do iw=1,NWRDS
              ixerr(iw) = ixtot !keep track of the starting address for word
              ixtot = ixtot+nframes(iw)-1
              if (ixtot.gt.maxreffrms) then
                      type *, 'too many ref frames in DP_INIT', iw, ixtot
                      STOP
              end if
              isave(iw) = 0 !initialize the index of the nse-long buffer
              do ix=ixerr(iw)+1,ixtot !initialize the subsequence error array
                      do k=1,nse
                              seqerr(k, ix) = dpemax
                      end do
              end do
      end do
      return

*******
      entry DP_SCAN (NW, TINDEX, ERRORS, OPTERR)

      if (TINDEX.gt.maxinfrms) STOP 'TINDEX too large in call to DP_SCAN'
      ixerror = ixerr(NW) !addr to save seqerr data
      ixtime = ixerror+(TINDEX-1)*ixtot !compute addr to save time_incr
      isave(NW) = 1+MOD(isave(NW),nse) !compute next save index
      ise = isave(NW)

      do nr=nframes(NW),1,-1 !find best path up through last reference frame
              ieo = nr+ixerror-1 !seqerr address
              ito = nr-1+ixtime !time_incr address
              if (nr.eq.1) then !initialize previous error for first point
                      cum_error = 0.0
              else !find best previous error within time-warp factor of 2
                      cum_error = seqerr(1,ieo)+weight(ise-1)
                      time_incr(ito) = ise-1
                      do k=2,nse
                              cand_err = seqerr(k,ieo)+weight(ise-k)
                              if (cand_err.lt.cum_error) then
                                      cum_error = cand_err
                                      time_incr(ito) = ise-k
                              end if
                      end do
```

```
          end if
          cum_error = cum_error+ERRORS(nr)
          if (nr.eq.nframes(NW)) then !output total sequence error
                  OPTERR = cum_error
          else !save subsequence error
                  seqerr(ise,ieo+1) = cum_error
          end if
      end do
      return

******
      entry DP_GET_TIMES (NW, TLAST, TIMES)

      if (TLAST.gt.maxinfrms) STOP 'TLAST too large in call to DP_GET_TIMES'
      TIMES(nframes(NW)) = TLAST
      do nr=nframes(NW),2,-1
              ixtime = nr-1+ixerr(NW)+((TIMES(nr)-1)*ixtot) !time_incr addr
              idelta = time_incr(ixtime)
              if (idelta.le.0) idelta = idelta+nse
              TIMES(nr-1) = TIMES(nr)-idelta
      end do
      return

      end
```

EP 0 190 489 B1

```
"**********************************************************************
"
"                    VFC SUBROUTINE FOR DISTANCE COMPUTATION
"
"**********************************************************************
        DEFINE DISTAP (NFEAT, FVIN, NFREF, XSC, XFM, REFFV, WK, FRMERR, NFV)
"**********************************************************************
"        NFEAT    : # OF FEATURES IN FEATURE VECTOR
"        FVIN     : INPUT TEST FRAMES AP ADDRESS
"        NFREF    : # OF REFERENCE FRAMES
"        XSC      : AP ADDRESS OF WORK AREA. TO CONTAIN TRANSFORMED INPUT FRAMES.
"        XFM      : AP ADDRESS OF TR MATRICES
"  .     REFFV    : AP ADDRESS OF REFERNCE FEATURE VECTORS
"        FRMERR   : AP ADDRESS OF DISTANCES
"        WK       : AP ADDRESS OF WORK AREA. SIZE NFEAT+NFREF
"        NFV      : # OF TEST FRAMES TO PROCESS
"**********************************************************************
"
"        LOCAL    NFR, TEMP, NFEATS, WKI, WK1, AREF, AXFM
"
         NFEATS = NFEAT * NFEAT
         WK1 = WK + NFEAT
"
"INPUT FRAME LOOP:
FLOOP:   NFR = 1
         WKI = WK1
         AREF = REFFV
         AXFM = XFM
"
"REFERENCE FRAME LOOP:  COMPUTE ERROR FOR EVERY REFERENCE FRAME
LOOP:    CALL MMUL32(FVIN,1,AXFM,1,XSC,1,1,NFEAT,NFEAT)   "TRANSFORM INPUT FV
         CALL VSUB (AREF, 1, XSC, 1, WK, 1 ,NFEAT)         "SUBTRACT REFERNCE
         CALL SVESQ (WK,1,WKI,NFEAT)                       "SUM OF SQS INTO WKI
         WKI = WKI + 1
         AREF = AREF + NFEAT
         AXFM = AXFM + NFEATS
         NFR = NFR + 1
         IF NFR <= NFREF GOTO LOOP
"--------
"
         CALL VMOV (WK1, 1, FRMERR, 1, NFREF)
         FRMERR = FRMERR+NFREF
         FVIN = FVIN+NFEAT
         NFV = NFV - 1
         IF NFV > 0 GOTO FLOOP
"--------
"
         END
```

## Claims

1. A method of recognizing input speech signals organized into a sequence of frames comprising:

storing a plurality of reference frames of reference feature vectors representing reference words, generating feature vectors for each frame of said speech signals,

determining the distance measure between respective frames of feature vectors representative of said speech signals and each of said plurality of reference frames of reference feature vectors representing reference words to establish the best match between each frame of feature vectors and one of the plurality of reference frames of reference feature vectors, and

recognizing said input speech signals as one of said reference words based upon the best match between respective frames of feature vectors and a corresponding one of the plurality of reference frames of reference feature vectors;

characterized in that the generation of feature vectors for each frame of speech signals is provided by generating a spectral feature vector (12,14) for each frame of said speech signals, and by

concatenating said spectral feature vectors of adjacent frames to form frame-pair feature vectors (16),

transforming said frame-pair feature vectors (18) to compute the likelihood that each frame-pair feature vector was produced by each said reference frame, said computation being performed individually and independently for each Said reference frame (20),

24

and in that the determination of the distance measure is accomplished by constructing an optimum time path through said input speech signals as represented by the frame-pair feature vectors for each of said computed likelihoods (22), and

the recognition of said input speech signals as one of said reference words (24) is achieved in response to said computed likelihoods and said optimum time paths.

2. A method as set forth in claim 1, further characterized in that the generation of a spectral feature vector includes:

initially analyzing each frame of said speech signals by linear predictive coding (10) to provide a linear predictive coding model comprising a plurality of spectral linear predictive coding parameters defining a spectral parameter vector for each frame of said speech signals, and

thereafter generating said spectral feature vector (12,14) from said spectral parameter vector for each frame of said speech signal.

3. A method as set forth in claim 2, further characterized in that the generation of a spectral feature vector further includes:

transforming said plurality of spectral linear predictive coding parameters to filter bank representations (12) in defining said spectral parameter vector for each frame of said speech signals prior to the generation of said spectral feature vector from said spectral parameter vector for each frame of said speech signals.

4. A method as set forth in claim 3, further characterized in that the generation of a spectral feature vector further comprises:

transforming said filter bank representation to provide a spectral feature vector for each frame of said speech signals (14), the transforming of said filter bank representations including

estimating a covariance matrix of said filter bank representations and decomposing the resulting matrix to eigenvalues, and

eliminating selected ones of said eigenvalues to reduce noise.

5. A method as set forth in any preceding claim, further characterized in that the computation of the likelihood that each transformed frame-pair feature vector was produced by each said reference frame is accomplished by

multiplying each said transformed frame-pair feature vector by a matrix representing the statistical distribution of said transformed frame-pair feature vector under the hypothesis that a particular reference frame produced each transformed frame-pair feature vector (20).

6. A method as set forth in any preceding claim, further characterized in that the construction of an optimum time path through said input speech signals is performed by dynamic time warping (22).

7. Apparatus for recognizing input speech signals organized into a sequence of frames in accordance with the method as set forth in any preceding claim, wherein said apparatus comprises

means for storing a plurality of reference frames of reference feature vectors representing reference words,

means for generating feature vectors for each frame of said speech signals,

means for determining the distance measure between respective frames of feature vectors representative of said speech signals and each of said plurality of reference frames of reference feature vectors representing reference words to establish the best match between each frame of feature vectors and one of the plurality of reference frames of reference feature vectors, and

decision logic means for recognizing said input speech signals as one of said reference words based upon the best match between respective frames of feature vectors and a corresponding one of the plurality of reference frames of reference feature vectors;

characterized in that said feature vector generating means comprises means (12,14) for generating a spectral feature vector for each frame of said speech signals,

means (16) for concatenating said spectral feature vectors of adjacent frames to form frame-pair feature vectors,

means (18) for transforming said frame-pair feature vectors including means (20) for computing the likelihood that each frame-pair feature vector was produced by each said reference frame, said computation being performed individually and independently for each said reference frame,

said distance measure determining means comprising means (22) for constructing an optimum time path through said input speech signals as represented by the frame-pair feature vectors for each of said computed likelihoods, and

said decision logic means (24) being effective for recognizing said input speech signals as one of said reference words in response to said computed likelihoods and said optimum time paths.

8. An apparatus as set forth in claim 7, further characterized in that said means for computing the likelihood comprises:

means (20) for multiplying each of said frame-pair feature vectors by a matrix representing the statistical distribution of said frame-pair feature vector under the hypothesis that a particular reference frame produced each frame-pair feature vector.

9. An apparatus as set forth in either of claims 7 or 8, further characterized in that said means for constructing an optimum time path comprises dynamic time warping means (22).

**Revendications**

1. Procédé de reconnaissance de signaux de parole d'entrée organisés en une suite de trames comprenant :
   - le stockage d'un ensemble de trames de référence de vecteurs caractéristiques de référence représentant des mots de référence ;
   - la génération de vecteurs caractéristiques pour chaque trame desdits signaux de parole ;
   - la détermination de la mesure de distance entre trames respectives de vecteurs caractéristiques représentatifs desdits signaux de parole et chaque trame dudit ensemble de trames de référence de vecteurs caractéristiques de référence représentant des mots de référence pour constituer la meilleure correspondance entre chaque trame de vecteurs caractéristiques et une trame de l'ensemble de trames de référence de vecteurs caractéristiques de référence ; et
   - la reconnaissance desdits signaux de parole d'entrée comme étant l'un desdits mots de référence fondée sur la meilleure correspondance entre trames respectives de vecteurs caractéristiques et une trame correspondante de l'ensemble des trames de référence de vecteurs caractéristiques de référence ;
   - caractérisé en ce que la génération des vecteurs caractéristiques pour chaque trame de signaux de parole est réalisée en générant un vecteur caractéristique de spectre (12, 14) pour chaque trame desdits signaux de parole ; et
   - en concabénant lesdits vecteurs caractéristiques de spectre de trames adjacents pour former des vecteurs caractéristiques appariés de trame (16) ;
   - en transformant lesdits vecteurs caractéristiques (18) appariés de trame pour calculer la probabilité pour que chaque vecteur caractéristique apparié de trame ait été produit par chacune desdites trames de référence, ledit calcul étant effectué individuellement et indépendamment pour chacune desdites trames de référnce (20) ; et
   - en ce que la détermination de la mesure de distance est réalisée en construisant un chemin temporel optimal à travers lesdits signaux de parole d'entrée tels qu'ils sont représentés par les vecteurs caractéristiques appariés de trame, pour chacune desdites probabilités calculées (22) ; et
   - en ce que la reconnaissance desdits signaux de parole d'entrée en tant que mots de référence (24) est exécutée en fonction desdites probabilités et desdits chemins temporels optimaux.

2. Procédé selon la revendication 1, caractérisé en outre, en ce que la génération d'un vecteur caractéristique de spectre comprend :
   - l'analyse initiale de chaque trame desdits signaux de parole par codage par prédiction linéaire (10) pour fournir un modèle de codage par prédiction linéaire comprenant un ensemble de paramètres de codage par prédiction linéaire de spectre définissant un vecteur de paramètres de spectre pour chacune des trames desdits signaux de parole ; et
   - par la suite la génération dudit vecteur caractéristique de spectre (12, 14) à partir dudit vecteur de paramètres de spectre pour chaque trame dudit signal de parole.

3. Procédé selon la revendication 2, caractérisé en outre, en ce que la génération du vecteur caractéristique comprend de plus :

26

- la transformation dudit ensemble de paramètres de codage par prédiction linéaire de spectre en représentations de banc de filtres (12) en définissant ledit vecteur de paramètres de spectre pour chaque trame desdits signaux de parole avant la génération dudit vecteur caractéristique de spectre à partir dudit vecteur de paramètre de spectre pour chaque trame desdits signaux de parole.

4. Procédé selon la revendication 3, caractérisé en outre, en ce que la génération du vecteur caractéristique de spectre comprend de plus :
   - la transformation de ladite représentation de banc de filtres pour fournir un vecteur caractéristique de spectre pour chaque trame desdits signaux de parole (14), la transformation desdites représentations de banc de filtres comprenant :
   - l'estimation d'une matrice de covariance desdites représentations de banc de filtres et la décomposition de la matrice résultante en valeurs propres ; et
   - l'élimination de certaines desdites valeurs propres afin de réduire le bruit.

5. Procédé selon l'une quelconque des revendications précédentes, caractérisé en outre, en ce que le calcul de la probabilité que chaque vecteur caractéristique apparié de trame et transformé ait été produit par chacune desdites trames de référence est effectué en :
   - multipliant chacun desdits vecteurs caractéristiques appariés de trame et transformés par une matrice représentant la distribution statistique dudit vecteur caractéristique apparié de trame et transformé, dans l'hypothèse où une trame particulière de référence a produit chaque vecteur caractéristique apparié de trame et transformé (20).

6. Procédé selon l'une des revendications précédentes, caractérisé en outre en ce que la construction d'un chemin temporel optimal à travers lesdits signaux de parole d'entrée est réalisée par distorsion dynamique du temps (22).

7. Dispositif de reconnaissance de signaux de parole d'entrée organisés en une suite de trames suivant le procédé selon l'une quelconque des revendications précédentes, ledit dispositif comprenant :
   - des moyens de stockage d'un ensemble de trames de référence de vecteurs caractéristiques de référence représentant des mots de référence ;
   - des moyens de génération de vecteurs caractéristiques pour chaque trame desdits signaux de parole ;
   - des moyens de détermination de la mesure de distance entre trames respectives de vecteurs caractéristiques représentatifs desdits signaux de parole et chaque trame dudit ensemble de trames de référence de vecteurs caractéristiques de référence représentant des mots de référence pour constituer la meilleure correspondance entre chaque trame de vecteurs caractéristiques et une trame de l'ensemble des trames de référence de vecteurs caractéristiques de référence ; et
   - des moyens logiques de décision pour la reconnaissance desdits signaux de parole d'entrée comme étant l'un desdits mots de référence fondée sur la meilleure correspondance entre trames respectives de vecteurs caractéristiques et une trame correspondante de l'ensemble des trames de référence de vecteurs caractéristiques de référence ;
       caractérisé en ce que lesdits moyens de génération de vecteurs caractéristiques comprennent des moyens (12, 14) de génération d'un vecteur caractéristique de spectre pour chaque trame desdits signaux de parole ;
   - des moyens (16) de concaténation desdits vecteurs caractéristiques de spectre de trames adjacentes pour former des vecteurs caractéristiques appariés de trame ;
   - des moyens (18) de transformation desdits vecteurs caractéristiques appariés de trame comprenant des moyens (20) de calcul de la probabilité pour que chaque vecteur caractéristique apparié de trame ait été produit par chacune desdites trames de références, ledit calcul étant effectué individuellement et indépendamment pour chacune desdites trames de référence ;
   - lesdits moyens de détermination de la mesure de distance comprenant des moyens (22) de construction d'un chemin temporel optimal à travers lesdits signaux de parole d'entrée tels qu'ils sont représentés par les vecteurs caractéristiques appariés de trame pour chacune desdites probabilités calculées ; et
   - lesdits moyens logiques de décision (24) servant à reconnaître lesdits signaux de parole d'entrée comme étant l'un desdits mots de référence en fonction desdites probabilités calculées et desdits chemins temporels optimaux.

8. Dispositif selon la revendication 7, caractérisé en outre en ce que lesdits moyens de calcul de la probabilité comprennent :

- des moyens (20) pour multiplier chacun desdits vecteurs caractéristique appariés de trame par une matrice représentant la distribution statistique dudit vecteur caractéristique apparié de trame dans l'hypothèse où une trame particulière de référence a produit chaque vecteur caractéristique apparié de trame.

9. Dispositif selon l'une des revendications 7 ou 8, caractérisé en outre en ce que lesdits moyens de construction d'un chemin temporel optimal comprenant des moyens de distorsion dynamique du temps (22).

**Patentansprüche**

1. Verfahren zum Erkennen von Eingangssprachsignalen, die in einer Folge von Rahmen organisiert sind, enthaltend:

Speichern mehrerer Referenzrahmen aus Referenzmerkmalsvektoren, die Referenzwörter repräsentieren,

Erzeugen von Merkmalsvektoren für jeden Rahmen der Sprachsignale,

Bestimmen des Abstandsmaßes zwischen jeweiligen Rahmen aus Merkmalsvektoren, die die Sprachsignale um jeden der mehreren, Referenzwörter repräsentierenden Referenzrahmen aus Referenzmerkmalsvektoren repräsentieren, zur Erzielung der besten Übereinstimmung zwischen jedem Rahmen aus Merkmalsvektoren und einem der mehreren Referenzrahmen aus Referenzmerkmalsvektoren, und

Erkennen der Eingangssprachsignale als eines der Referenzwörter auf der Basis der besten Übereinstimmung zwischen jeweiligen Rahmen aus Merkmalsvektoren und einem entsprechenden Rahmen der mehreren Referenzrahmen aus Referenzmerkmalsvektoren,

**dadurch gekennzeichnet,** daß die Erzeugung von Merkmalsvektoren für jeden Rahmen aus Sprachsignalen durch Erzeugen eines Spektralmerkmalsvektors (12, 14) für jeden Rahmen der Sprachsignale und durch Verketten der Spektralmerkmalsvektoren aneinandergrenzender Rahmen zur Bildung von Rahmenpaar-Merkmalsvektoren (16), sowie Transformieren der Rahmenpaar-Merkmalsvektoren (18) zum Berechnen der Wahrscheinlichkeit, daß jeder Rahmenpaar-Merkmalsvektor durch jeden der Referenzrahmen erzeugt worden ist, erfolgt, wobei die Berechnung einzeln und unabhängig für jeden der Referenzrahmen (20) durchgeführt wird, und daS die Bestimmung des Abstandsmaßes durch Konstruieren eines optimalen Zeitwegs durch die Eingangssprachsignale erzielt wird, die durch Rahmenpaar-Merkmalsvektoren für jede der berechneten Wahrscheinlichkeiten (22) repräsentiert werden, und daß das Erkennen der Eingangssprachsignale als eines der Referenzwörter (24) in Abhängigkeit von den berechneten Wahrscheinlichkeiten und den optimalen Zeitwegen erzielt wird.

2. Verfahren nach Anspruch 1, **dadurch gekennzeichnet,** daß die Erzeugung eines Spektralmerkmalsvektors folgendes enthält:

anfängliches Analysieren jedes Rahmens aus Sprachsignalen durch eine lineare Voraussagecodierung (10) zur Erzeugung eines linearen Voraussagecodiermodells mit mehreren spektralen linearen Voraussagecodierungsparametern, die einen Spektralparametervektor für jeden Rahmen aus Sprachsignalen definieren, und

anschließendes Erzeugen des Spektralmerkmalsvektors (10, 12) aus dem Spektralparametervektor für jeden Rahmen aus dem Sprachsignal.

3. Verfahren nach Anspruch 2, **dadurch gekennzeichnet,** daß die Erzeugung eines Spektralmerkmalsvektors ferner folgendes enthält:

Transformieren der mehreren spektralen linearen Voraussagecodierungsparameter in Filterbankdarstellungen (12) bei der Definition des Spektralparametervektors für jeden Rahmen der Sprachsignale vor der Erzeugung des Spektralmerkmalsvektors aus dem Spektralsparametervektor für jeden Rahmen aus Sprach Signalen.

4. Verfahren nach Anspruch 3, **dadurch gekennzeichnet,** daß die Erzeugung eines Spektralmerkmalsvektors weiterhin enthält:

Transformieren der Filterbankdarstellung zur Erzeugung eines Spektralmerkmalsvektors für jeden Rahmen aus Sprachsignalen (14), wobei das Transformieren der Filterbankdarstellungen enthält:

Abschätzen einer Covarianzmatrix aus den Filterbankdarstellungen und Zerlegen der resultierenden Matrix in Eigenwerte und Eliminieren ausgewählter Eigenwerte zur Störreduzierung.

5. Verfahren nach einem der vorhergehenden Ansprüche, **dadurch gekennzeichnet,** daß die Berechnung der Wahrscheinlichkeit, daß jeder transformierte Rahmenpaar-Merkmalsvektor für jeden der Referenzrahmen erzeugt wurde, ausgeführt wird, indem jeder der transformierten Rahmenpaar-Merkmalsvektoren mit einer Matrix multipliziert wird, die die statistische Verteilung des transformierten Rahmenpaar-Merkmalsvektors unter der Annahme repräsentiert, daß ein bestimmter Bezugsrahmen jeden transformierten Rahmenpaar-Merkmalsvektor (20) erzeugt hat.

6. Verfahren nach einem der vorhergehenden Ansprüche, **dadurch gekennzeichnet,** daß die Konstruktion eines optimalen Zeitwegs durch die Eingangssprachsignale durch eine dynamische Zeitverwerfung (22) durchgeführt wird.

7. Vorrichtung zum Erkennen von Eingangssprachsignalen, die in einer Folge von Rahmen organisiert sind, gemäß dem Verfahren nach einem der vorhergehenden Ansprüche, mit Mitteln zum Speichern mehrerer Referenzrahmen aus Referenzmerkmalsvektoren, die Referenzwörter repräsentieren, Mitteln zum Erzeugen von Merkmalsvektoren für jeden Rahmen aus den Sprachsignalen, Mitteln zum Bestimmen des Abstandsmaßes zwischen jeweiligen Rahmen aus Merkmalsvektoren, die die Sprachsignale repräsentieren, und jedem der mehreren Referenzrahmen aus Referenzmerkmalsvektoren, die Referenzwörter repräsentieren, zur Erzielung der besten Übereinstimmung zwischen jedem Rahmen aus Merkmalsvektoren und einem der mehreren Referenzrahmen aus Referenzmerkmalsvektoren, und Entscheidungslogikmitteln zum Erkennen der Eingangssprachsignale als eines der Referenzwörter auf der Basis der besten Übereinstimmung zwischen jeweiligen Rahmen aus Merkmalsvektoren und einem entsprechenden Rahmen der mehreren Referenzrahmen aus Referenzmerkmalsvektoren, **dadurch gekennzeichnet,** daß die Mittel zum Erzeugen der Merkmalsvektoren Mittel (12, 14) zum Erzeugen eines Spektralmerkmalsvektors für jeden Rahmen aus Sprachsignalen enthalten, Mittel (16) zum Aneinanderfügen der Spektralmerkmalsvektoren benachbarter Rahmen zur Bildung von Rahmenpaar-Merkmalsvektoren enthalten, Mittel (18) zum Transformieren der Rahmenpaar-Merkmalsvektoren einschließlich von Mitteln (20) zum Berechnen der Wahrscheinlichkeit, daß jeder Rahmenpaar-Merkmalsvektor von jedem der Bezugsrahmen erzeugt wurde, enthalten, wobei die Berechnung einzeln und unabhängig für jeden der Bezugsrahmen durchgeführt wird, daß die Mittel zum Bestimmen des Abstandsmaßes Mittel (22) zum Konstruieren eines optimalen Zeitwegs durch die Eingangssprachsignale enthalten, die durch die Rahmenpaar-Merkmalsvektoren für jede der berechneten Wahrscheinlichkeiten repräsentiert werden, und daß die Entscheidungslogikmittel (24) die Eingangssprachsignale als eines der Bezugswörter in Abhängigkeit von den berechneten Wahrscheinlichkeiten und den optimalen Zeitwegen erkennen.

8. Verfahren nach Anspruch 7, **dadurch gekennzeichnet,** daß die Mittel zum Berechnen der Wahrscheinlichkeit Mittel (20) zum Multiplizieren jedes der Rahmenpaar-Merkmalsvektoren mit einer Matrix enthalten, die die statistische Verteilung jedes Rahmenpaar-Merkmalsvektors unter der Annahme repräsentiert, daß ein bestimmter Bezugsrahmen jeden Rahmenpaar-Merkmalsvektor erzeugt hat.

9. Verfahren nach Anspruch 7 oder 8, **dadurch gekennzeichnet,** daß die Mittel zum Konstruieren eines optimalen Zeitwegs Mittel (22) zur dynamischen Zeitverwerfung enthalten.

$$f_j^* = \left[ \frac{f_j^*}{f_{j-2}^*} \right]$$

$$S(t) \rightarrow Si$$

| LPC MODEL | FILTER BANK TRANSFORMATION | PRINCIPAL FEATURE VECTOR TRANSFORMATION | CONCATENATE FRAME |

$\underline{f}_j$

$\underline{f}^*$

| PV TRANSFORMATION (f OF REFERENCE FRAMES) | COMPARATOR $|\underline{X} - \underline{Y}|$ | DYNAMIC TIME WARPING | SIGNAL DECISION LOGIC |

$\{T_K\}$

$\{Y_K\}$

EP 0 190 489 B1